# EUROPEAN PATENT APPLICATION

(11) **EP 4 764 650 A1**
(43) Date of publication of application: **24.06.2026**
(21) Application number: 25220049.8
(22) Date of filing: 02.12.2025
(51) Int. Cl.: G02B 27/00

(54) **OPTICAL ELEMENT CLEANING DEVICE**

(30) Priority: 20.12.2024 US 202418989088
(71) Applicant: SICK Product & Competence Center Americas LLC, Minneapolis, MN 55438 (US)
(72) Inventor: Ajagbusi, Daniel, Minneapolis, MN, 55443 (US); Balasubramanian, Dhayalan, Minneapolis, MN, 55077 (US)
(74) Representative: Rieger, Daniel-Stephan

(57) **Abstract**

The optical element cleaning device includes an annular base and a plurality of blades. The annular base has a central opening, and the plurality of blades each have opposed first and second ends. The first end of each of the blades is beveled and the second end of each of the blades is pivotally attached to the annular base. The second ends of the plurality of blades are annularly arrayed about the central opening. A plurality of actuators are respectively coupled to the plurality of blades, and a controller is in communication with the plurality of actuators. The controller is configured to individually activate the plurality of actuators such that at least one of the blades is driven to rotate with respect to the annular base by at least one of the actuators. Rotation of the at least one of the blades at least partially covers the central opening.

## Description

### FIELD

The disclosure of the present patent application relates to the cleaning of optical elements, such as lenses, transparent windows and the like, and particularly to an optical element cleaning device configured to operate in a manner similar to an iris-type diaphragm.

### DESCRIPTION OF RELATED ART

Lenses, transparent windows and other optical elements found in cameras, sensors and the like require constant cleaning to remove dirt, dust, oil smudges, etc. Cleaning systems which are designed for onboard usage (i.e., permanent attachment to the camera, sensor or the like) often use small wiping elements and/or sprayers for spraying a cleaning fluid. Such cleaning systems have a broad field of cleaning and are incapable of targeted cleaning of only a portion or section of the optical element. Further, due to the mechanical parts and/or fluid application parts, such systems typically take up a significant amount of room on the body of the device and are often permanent parts of the device rather than allowing for retrofitting of an existing device with a cleaning system. Thus, an optical element cleaning device solving the aforementioned problems is desired.

### SUMMARY

The optical element cleaning device includes an annular base and a plurality of blades. The annular base has a central opening, and the plurality of blades each have opposed first and second ends. The first end of each of the blades is beveled and the second end of each of the blades is pivotally attached to the annular base. The second ends of the plurality of blades are annularly arrayed about the central opening. A plurality of actuators are respectively coupled to the plurality of blades, and a controller is in communication with the plurality of actuators. The controller is configured to individually activate the plurality of actuators such that at least one of the blades is driven to rotate with respect to the annular base by at least one of the actuators. Rotation of at least one of the blades at least partially covers the central opening.

Each of the blades has an outer surface and an inner surface, with the inner surfaces of the blades facing the annular base. A plurality of cleaning layers may be respectively attached to the inner surfaces of the blades. As a non-limiting example, each of the cleaning layers may be a microfiber cloth layer.

An optical receiver, which may be incorporated in an optical system, such as an optoelectronic camera or the like, may be in communication with the controller, such that the controller can determine a location of an obstruction on an optical element based on signals received from the optical receiver. The controller may be further configured to activate selected ones of the plurality of actuators to clean the optical element at the location of the obstruction with selected ones of the plurality of blades. Alternatively, the controller may be configured to activate the actuators to clean the optical element at a predetermined interval.

These and other features of the present subject matter will become readily apparent upon further review of the following specification.

### BRIEF DESCRIPTION OF DRAWINGS

Fig. 1 is a front view of an optical element cleaning device.
Fig. 2 is a front view of the optical element cleaning device, shown with selected individual blades being deployed.
Fig. 3 is a partial front view of a conventional iris-type diaphragm.
Fig. 4 is a front view of the conventional iris-type diaphragm of Fig. 3.
Fig. 5 is a front view of the conventional iris-type diaphragm of Fig. 3, shown with the blades thereof rotated and deployed.
Fig. 6 is a side view of a blade of the optical cleaning device.
Fig. 7 is a block diagram illustrating control of actuators of the optical cleaning device.
Fig. 8 diagrammatically illustrates an optoelectronic camera used in conjunction with the optical element cleaning device.
Fig. 9 is a block diagram illustrating electrostatic charging of the blades of the optical element cleaning device.

Similar reference characters denote corresponding features consistently throughout the attached drawings.

### DETAILED DESCRIPTION

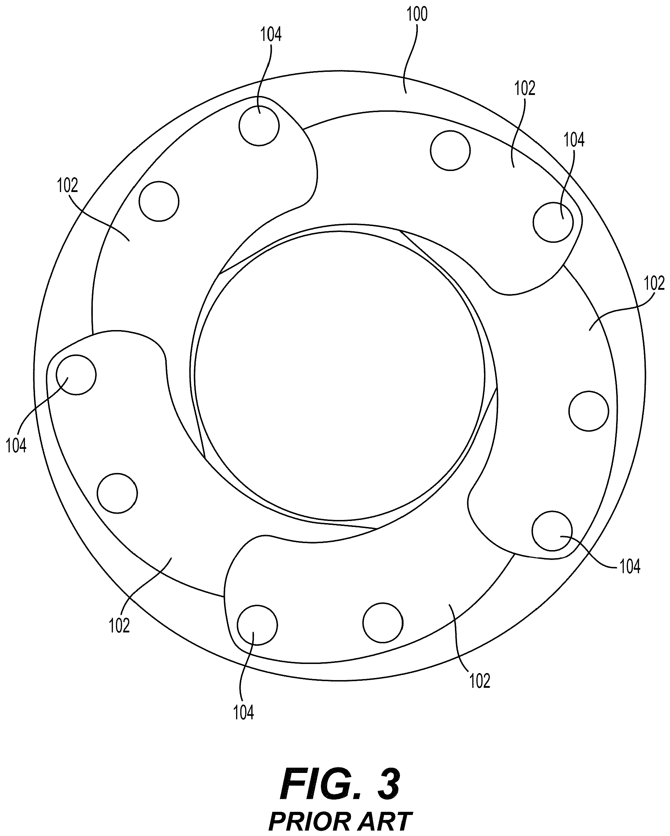

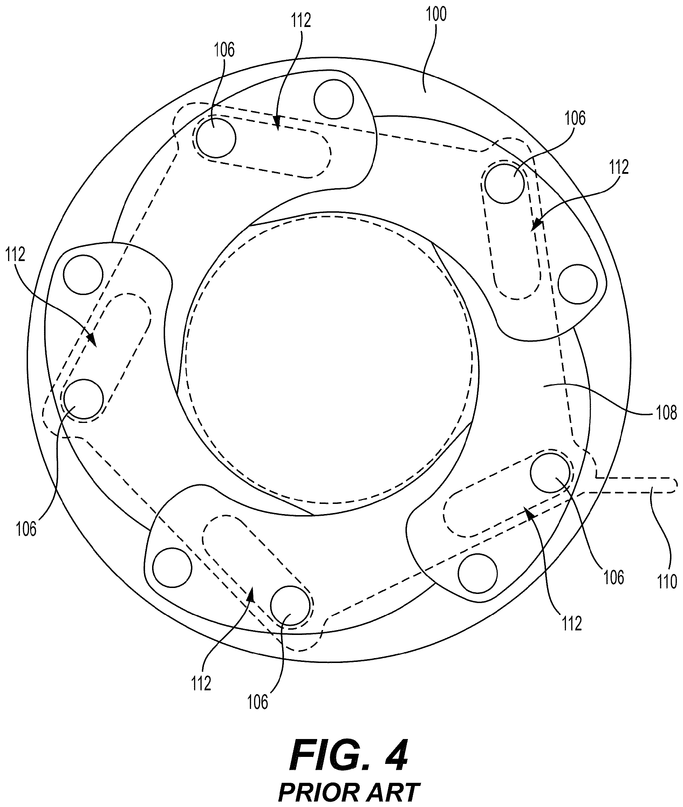

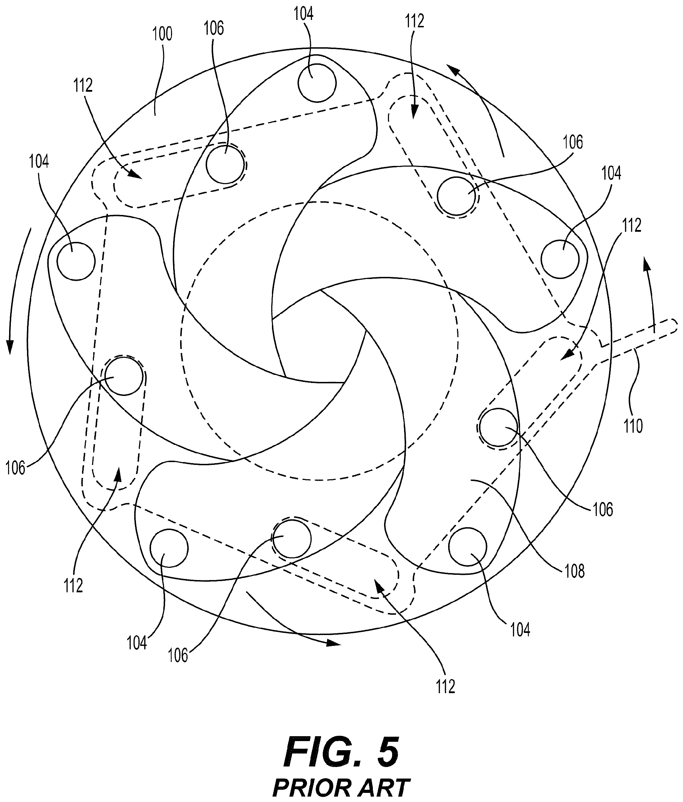

Figs. 3-5 illustrate a conventional iris-type diaphragm, such as those commonly found in film cameras. A plurality of blades 102 are pivotally attached to an annular base 100 by pivot pins 104, allowing each blade 102 to rotate about the pivot pin 104 with respect to the annular base 100. As shown in Fig. 4, a rotating plate 108 is overlaid on the plurality of blades 102. The rotating plate 108 has a plurality of slots 112 formed therethrough. Each blade 102 has a sliding pin 106 which is slidably received within a corresponding one of the slots 112. As shown in Fig. 5, as rotating plate 108 rotates with respect to the annular base 100 (driven to rotate, for example, by a handle 110) the sliding pins 106 are driven to linearly slide within their respective slots 112, thus causing the blades 102 to simultaneously rotate about their respective pivot pins 104, closing the iris defined by the blades 102. The iris is then opened again by reversing the rotation of rotating plate 108 with respect to annular base 100.

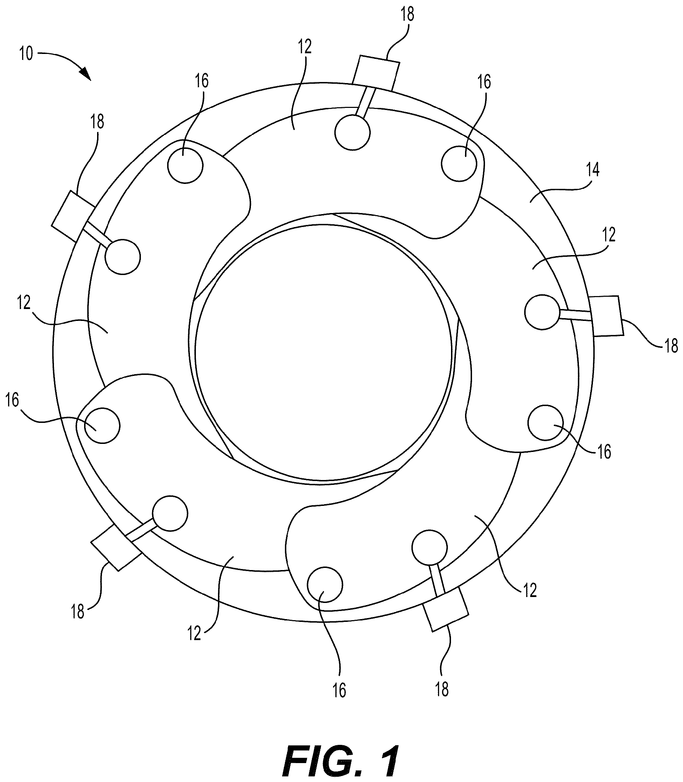

In contrast with the conventional iris-type diaphragm shown in Figs. 3-5, as shown in Fig. 1, the optical element cleaning device 10 includes a plurality of blades 12 pivotally attached to an annular base 14, but each blade 12 is independently driven to rotate with respect to the annular base 14, rather than the simultaneous blade rotation found in a conventional iris-type diaphragm. As shown, and similar to the conventional iris-type diaphragm, each blade 12 is pivotally attached to the annular base 14 at one end by a pivot pin 16 or the like. However, an actuator 18 is provided for each blade 12, and each actuator 18 selectively and controllably rotates its corresponding blade 12 with respect to annular base 14, with rotation occurring about pivot pin 16. It should be understood that pivot pins 16 are shown for exemplary purposes only and that blades 12 may be pivotally attached to annular base 14 using any suitable type of pivotal or rotational connection.

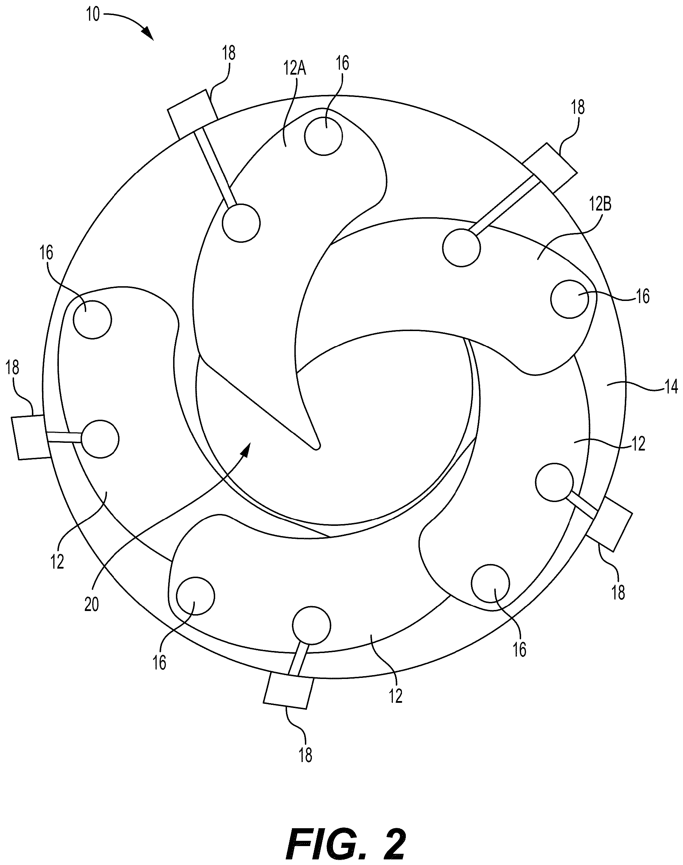

In the non-limiting example of Fig. 2, two of the blades (labeled 12A and 12B in Fig. 2) are driven to rotate about their respective pivot pins 16 by their respective actuators 18, while the remainder of the blades 12 remain in their initial, non-rotated positions. In use, the annular base 14 is attached to equipment or a device having an optical element, such as a lens, a circular transparent window or the like, such that the optical element is positioned within central opening 20 formed through the center of annular base 14. In other words, the inner perimeter defining central opening 20 is positioned about the circumference of the optical element. Each blade 12 acts as a cleaning element to remove dust or other unwanted obstructions from the surface of the optical element. Although all of actuators 18 could be activated to rotate all of the blades 12 to clean the entire surface of the optical element (moving in a manner similar to the conventional iris-type diaphragm of Figs. 3-5), individual blades 12 may be rotated to only clean selected portions of the optical element. It should be understood that annular base 14 is shown for exemplary purposes only and may have any suitable size, shape and relative dimensions for attachment to a device or optical system about the optical element.

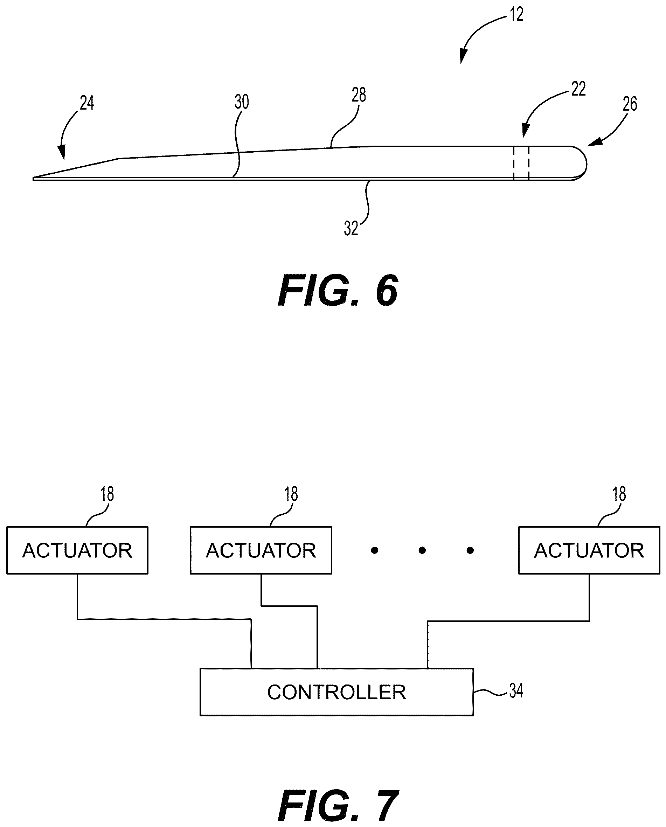

The blades 12 are substantially identical to one another. As shown in Fig. 6, each of the blades 12 has opposed first and second ends 24, 26, respectively. The first end 24 of each of the blades 12 is beveled and the second end 26 of each of the blades 12 is pivotally attached to the annular base 14. As shown in Fig. 6, a channel 22 may be formed through the second end 26 for receiving the corresponding pivot pin 16. As shown in Figs. 1 and 2, the second ends 26 of the plurality of blades 12 are annularly arrayed about the central opening 20. The plurality of actuators 18 are respectively coupled to the plurality of blades 12 and, as shown in Fig. 7, a controller 34 is in communication with the plurality of actuators 18. The controller 34 is configured to individually activate the plurality of actuators 18 such that at least one of the blades 12 is driven to rotate with respect to the annular base 14 by at least one of the actuators 18. Rotation of at least one of the blades 12 at least partially covers the central opening 20. As discussed above, in the non-limiting example of Fig. 2, two of the blades 12A, 12B are shown being driven to rotate to partially cover central opening 20, while the remainder of the blades 12 remain in their retracted or non-deployed state.

In addition to the motion shown in, for example, Fig. 2, actuators 18 may be used to impart an oscillation to the blades 12. As an example, each actuator 18 may be configured to impart oscillating movement of its associated blade 12 or may be coupled with appropriate eccentric cams or the like to create such a motion. Thus, in addition to the extension and retraction of the blades 12, an additional oscillating or vibrating cleaning motion can be effected to improve the removal of smudges by imparting a scrubbing-type movement. As a further alternative, annular base 14 may be driven to rotate in an oscillating manner, imparting an oscillating or vibrating movement to all of the blades 12 simultaneously.

Returning to Fig. 6, each of the blades 12 has an outer surface 28 and an inner surface 30. When attached to the annular base 14, the inner surfaces 30 of the blades 12 face the annular base 14. A plurality of cleaning layers 32 may be respectively attached to the inner surfaces 30 of the blades 12. As a non-limiting example, each of the cleaning layers 32 may be a microfiber cloth layer. Thus, when annular base 14 is mounted about an optical element to be cleaned, the cleaning layers 32 of the blades 12 move across the surface of the optical element when the blades 12 are rotated.

It should be understood that each blade 12 is relatively thin and that the thickness of the blade 12 shown in Fig. 6 is exaggerated for purposes of illustration. It should be further understood that the number of blades 12 shown in Figs. 1 and 2, and the overall size, shape and relative dimensions of the blades 12 shown in Figs. 1, 2 and 6, are all shown for exemplary purposes only and may be varied. Additionally, it should be understood that the number of actuators 18 is shown for exemplary purposes only and should match the number of blades 12 such that blades 12 may be individually rotated. Alternatively, fewer actuators 18 may be used with individual mechanical couplings, including clutches or the like, for each of the blades 12. Blades 12 are preferably flexible to at least some degree, thus allowing the blades 12 to conform to a curved surface, such as that of a convex lens which is to be cleaned.

The beveled first end 24 of each blade 12 allows the blade 12 to gently but effectively scoop up dust or other particles or debris from the surface of the optical element. The cleaning layers 32 trap dust, dirt, etc. and the use of microfiber cloth, as a non-limiting example, provides cleaning without risk of scratching the surface of the optical element.

It should be understood that actuators 18 may be any suitable type of actuators. As a non-limiting example, each blade 12 may be connected to a dedicated micro-servo or micro-motor for controlling extension and retraction of the blade 12. As another non-limiting example, each actuator 18 may be a miniature linear actuator for moving each blade 12 along a guided path. It should be understood that actuators 18 may be coupled to blades 12 in any suitable manner. Actuators 18, under the control of controller 34, provide incremental control over the position of each blade 12, allowing for control over the surface area of the optical element which is to be cleaned. To prevent any unintended interactions between blades 12, each actuator 18 may be equipped with a feedback system (e.g., position sensors or encoders) to ensure that the movement of one blade 12 does not interfere with the others. In addition, a clutch mechanism may be used in conjunction with the actuators 18 to selectively disengage or engage individual blades 12.

It should be further understood that controller 34 may be any suitable type of controller, such as a processor, a programmable logic controller, control circuitry or the like. As will be described in greater detail below, controller 34 may work in conjunction with, or be integrated with, a camera or imaging system to which the optical element cleaning device 10 is attached. Controller 34 may include, or be in communication with, any suitable type of non-transitory computer readable memory, allowing operational instructions for actuators 18 to be stored therein.

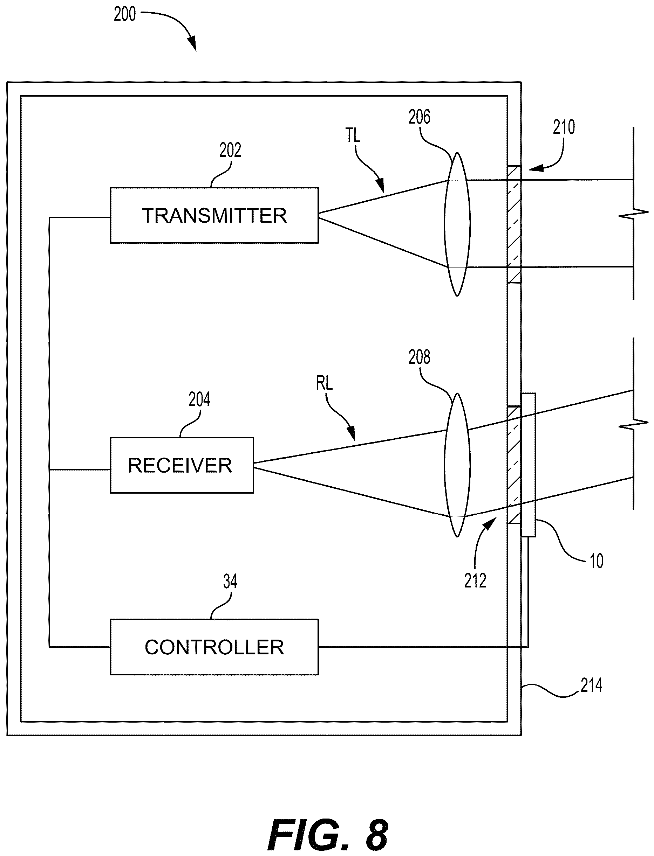

Fig. 8 depicts an optoelectronic camera 200, including a transmitter 202 for generating a transmitted light beam TL and a receiver 204 for receiving a reflected light beam RL. It should be understood that the optoelectronic camera 200 shown in Fig. 8 is simplified for purposes of illustration and clarity. Transmitted light beam TL passes through a lens 206 and exits housing 214 through a transparent window 210 to be reflected off on object in the environment around optoelectronic camera 200. The reflected light beam RL (reflected by the object) enters housing 214 through a transparent window 212, where it is focused by a lens 208 for reception by receiver 204. In Fig. 8, the optical element cleaning device 10 is shown mounted about transparent window 212, although it should be understood that the optical element cleaning device 10 could alternatively be mounted about transparent window 210 or either of lenses 206, 208 for cleaning thereof. As a further alternative, each of the optical elements of optoelectronic camera 200 could be equipped with its own dedicated optical element cleaning device 10.

In the non-limiting example of Fig. 8, controller 34, which actuates the actuators 18 of optical element cleaning device 10, is the same controller used to control transmitter 202 and analyze the signals generated by receiver 204, however, it should be understood that separate controllers may be used. Controller 34 on its own, or in conjunction with a separate controller incorporated into optoelectronic sensor 200, can be used to determine if transparent window 212 requires cleaning (in the non-limiting example of Fig. 8).

As a non-limiting example, receiver 204 may be a relatively simple photodetector including, for example, a single photoresistor. In such systems, the output from receiver 204 will typically be limited to a binary indication of received light intensity which, in the context of optoelectronic sensor 200, can be used as an indicator of the clarity of transparent window 212 (i.e., the transparent window 212 is either obstructed or clear). Controller 34 can then actuate, for example, all of the actuators 18 to clean the entire transparent window 212 after either a predetermined number of clear-to-obstructed transitions or after a predetermined time interval. As a further alternative, the particular blades 12 which are deployed during cleaning of the transparent window 212 may be preselected.

As another non-limiting example, receiver 204 may be a higher resolution photodetector, including, for example, a grid or array of photosensitive receivers that detect variations in reflected light intensity. In the context of optoelectronic sensor 200, these detected variations in intensity can be used to identify specific grid locations of transparent window 212 where obstructions may be found. In other words, for a grid of photosensitive receivers, the grid of photosensitive receivers receive light through a corresponding set of grid-like regions of the transparent window 212. Thus, obstructions on the transparent window 212 can be localized. When a particular section of the photodetector grid indicates a prolonged blockage, controller 34 can selectively activate the particular blades 12 corresponding to the affected area of transparent window 212. Controller 34 can leverage real-time feedback from the photodetector array of receiver 204 to determine if the obstruction has been cleared from the transparent window 212, allowing optical element cleaning device 10 to either continue with the current cleaning method or adjust the cleaning strategy accordingly.

It should be understood that the optical element cleaning device 10 may be used to clean any type of optical element requiring cleaning and may be incorporated into, or used in conjunction with, any suitable type of optical system, such as the non-limiting examples of optoelectronic cameras discussed above or in, as a further non-limiting example, an advanced photovision system, such as advanced cameras, multispectral photodetectors and the like. In such systems, similar to the photodetector grid system discussed above, controller 34 can be used to systematically analyze specific quadrants or regions of the optical element to ascertain whether an obstruction is present. However, in advanced systems with greater sensitivity and resolution, controller 34 can further determine the nature of the obstructions; e.g., smudges or other contaminants. Based on the detected location and type of obstruction, controller 34 can selectively actuate the appropriate ones of blades 12 with enhanced precision and adapt the cleaning methods based on detailed visual feedback. Controller 34 may also be configured to perform image classification using artificial intelligence or the like in order to analyze data from the inspection cameras to improve the detection and identification of smudges and debris, thus optimizing the cleaning cycles.

In Fig. 8, the optical element cleaning device 10 is shown mounted on the exterior of housing 214 of the optoelectronic camera 200. As another non-limiting example, the optical element cleaning device 10 may be integrated into a protective cover for a smartphone camera or the like in order to periodically clean the lens without user intervention.

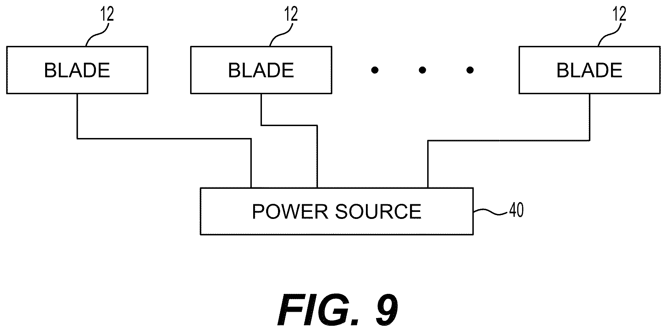

As a further alternative, blades 12 may be electrostatically charged to attract dust and particles more effectively, thus reducing the need for mechanical contact and minimizing wear on the optical element. As a non-limiting example, the blades 12 may be made from conductive polymers or thin metal films (e.g., aluminum or copper) that are lightweight and capable of holding an electrostatic charge. The surfaces of blades 12 may be further coated with materials that enhance charge retention and reduce the risk of discharge. As shown in Fig. 9, a low-voltage power source 40, such as a battery or capacitor bank, as non-limiting examples, may be in electrical communication with the blades 12 to provide the necessary charge. Electrical insulation may be applied between the blades 12 and other components of the system to prevent unintended discharges. Controller 34 or a separate charge control circuit may be used for safely charging and discharging the blades 12. Controller 34 or a separate circuit could include protection features, such as overcharge prevention, discharge control, and safety cutoffs to ensure the electrostatic charge is applied safely and effectively to blades 12. A feedback mechanism could also be used for monitoring the charge levels and adjusting the voltage as necessary to optimize the cleaning process.

It is to be understood that the optical element cleaning device is not limited to the specific embodiments described above, but encompasses any and all embodiments within the scope of the generic language of the following claims enabled by the embodiments described herein, or otherwise shown in the drawings or described above in terms sufficient to enable one of ordinary skill in the art to make and use the claimed subject matter.

## Claims

1. An optical element cleaning device, comprising:
an annular base having a central opening;
a plurality of blades each having opposed first and second ends, wherein the first end of each of the blades is beveled and wherein the second end of each of the blades is pivotally attached to the annular base, the second ends of the plurality of blades being annularly arrayed about the central opening;
a plurality of actuators respectively coupled to the plurality of blades; and
a controller in communication with the plurality of actuators, the controller being configured to individually activate the plurality of actuators such that at least one of the blades is driven to rotate with respect to the annular base by at least one of the actuators, wherein rotation of the at least one of the blades at least partially covers the central opening.

2. The optical element cleaning device as recited in claim 1, wherein each of the blades has an outer surface and an inner surface, the inner surfaces of the blades facing the annular base.

3. The optical element cleaning device as recited in claim 2, further comprising a plurality of cleaning layers respectively attached to the inner surfaces of the blades.

4. The optical element cleaning device as recited in claim 3, wherein each of the cleaning layers comprises a microfiber cloth layer.

5. The optical element cleaning device as recited in claim 1, further comprising an optical receiver in communication with the controller, the controller being further configured to determine a location of an obstruction on an optical element based on signals received from the optical receiver.

6. The optical element cleaning device as recited in claim 5, wherein the controller is further configured to activate selected ones of the plurality of actuators to clean the optical element at the location of the obstruction with selected ones of the plurality of blades.

7. The optical element cleaning device as recited in claim 1, wherein the controller is further configured to active at least one of the actuators at a predetermined interval.

8. The optical element cleaning device as recited in claim 1, further comprising an electrical power source for providing an electrostatic charge to the plurality of blades.
